# FASCICULE DE BREVET EUROPEEN

(11) **EP 4 217 852 B1**
(45) Date de publication et mention de la délivrance du brevet: **24.09.2025**
(21) Numéro de dépôt: 21773128.0
(22) Date de dépôt: 02.08.2021
(51) Int. Cl.: G06F 11/10, H04L 67/12, H04L 67/00, G06F 8/658, G06F 8/71

(54) **MISE A JOUR DU LOGICIEL D´UN CALCULATEUR EMBARQUE D'UN VEHICULE EN UTILISANT DES MEMOIRES D'EXECUTION, DE SAUVEGARDE ET DE CONTROLE**
BORDCOMPUTER SOFTWARE-UPDATE MIT AUSFÜHRUNG, BACKUP UND CONTROL SPEICHERN
VEHICLE ONBOARD COMPUTER SOFTWARE UPDATE USING EXECUTION, A BACKUP AND CONTROL MEMORIES

(30) Priorité: 22.09.2020 FR 2009572
(43) Date de publication de la demande: 02.08.2023
(73) Titulaire: Stellantis Auto SAS, 78300 Poissy (FR)
(72) Inventeur: LOPEZ, Thierry, 78700 CONFLANS STE HONORINE (FR); ROCHETTE, Francois, 92150 SURESNES (FR); SCHMIDT, Pierre, 95240 CORMEILLES EN PARISIS (FR); GEORGES, Emmanuel, 78300 POISSY (FR)
(74) Mandataire: ESIP
(86) Numéro de dépôt international: PCT/FR2021/051434
(87) Numéro de publication internationale: WO 2022/064118

(56) Documents cités:
- WO-A1-2020/113186
- CN-A- 110 471 680
- US-A1- 2019 057 214

## Description

### Domaine technique

L'invention concerne la mise à jour logicielle d'un ou plusieurs calculateurs d'un véhicule automobile réalisée à distance d'un outil de diagnostic aussi appelée mise à jour OTA (pour Over The Air).

### Arrière-plan technologique

Dans la suite de la description, lorsque le fichier à télécharger contient des instructions ou le code exécutable d'un logiciel, on parlera également de téléchargement d'un logiciel.

La complexité croissante de la fonction électronique embarquée entraîne une multiplication des boîtiers électroniques (ou calculateurs) montés sur les véhicules automobiles.

Afin de limiter la diversité qui en résulte, il a été décidé de reporter lorsque cela est possible la diversité matérielle sur le logiciel et de pratiquer un téléchargement de ces calculateurs. L'opération est réalisée moyennant un outil débarqué qui se connecte sur la prise diagnostic du véhicule et permet de programmer dans la mémoire du ou des calculateurs le logiciel qui assure un fonctionnement conforme du véhicule produit en prenant en compte les caractéristiques (motorisation, options) propres à ce véhicule.

La communication entre l'outil et le ou les calculateurs fait généralement usage soit de la technologie CAN 500kbps connue de l'état de l'art actuel ou de la technologie Ethernet 100 Mbits/s en cours de déploiement dans le monde automobile afin de transférer les données à programmer.

On connaît déjà dans l'état de la technique des procédés et des systèmes de téléchargement de fichiers dans des calculateurs embarqués à bord de véhicules automobiles, tels que ceux décrits par exemple dans le document FR-A-2719924. Ce document détaille les différentes étapes successives de la procédure utilisée lors de l'assemblage des véhicules ou dans le réseau après-vente d'un constructeur, lors de la correction d'une prestation par échange de fichier.

Cependant, dans le but de rendre les véhicules toujours plus sûrs pour leurs clients, les constructeurs automobiles envisagent de pouvoir réaliser certaines mises à jour directement chez le client final, à l'image de ce qui existe déjà dans le domaine du consumériste pour un PC ou un smartphone par exemple. En effet, les moyens de connectivité présents dans les véhicules permettent déjà d'échanger de nombreuses informations avec l'extérieur (informations de trafic, de navigation, de données pour la réparation ou pour les assureurs, ...) et ces échanges sont en pleine expansion. Il en résulte une demande accrue pour la protection des données clients, mais aussi pour une protection importante de ces véhicules compte tenu des possibilités de cyberattaque et du risque encouru sur la sécurité routière. En effet, lors de la détection d'une attaque de ce type et de la disponibilité d'un « patch » correctif (un logiciel ou module logiciel) en mesure d'en supprimer ou d'en réduire les risques, la vitesse à laquelle cette correction peut être installée revêt sans aucun doute un aspect primordial. Dans ce cas, une mise à jour OTA peut permettre de gagner beaucoup de temps en comparaison d'un rappel organisé des véhicules dans le garage du réseau agrée ou indépendant.

Pour pouvoir réaliser ce type d'opération directement chez le client final, il convient néanmoins de prendre en considérations plusieurs aspects qui ajoutent à la complexité de cette opération.

La mise à jour du logiciel d'un calculateur d'une automobile peut dans certains cas la rendre indisponible ou encore induire des conséquences importantes tant pour les occupants du véhicule que pour son environnement. C'est la raison pour laquelle la mise à jour en OTA de certains calculateurs et en particulier ceux qui sont associés à la dynamique du véhicule nécessitent un mécanisme appelé Rollback (ou retour en arrière, ou encore retour à un état précédent) qui permet de revenir à la configuration logicielle antérieure dans le cas de la détection d'un problème survenue pendant la mise à jour du logiciel d'un ou plusieurs calculateurs du véhicule.

Ce type de problème peut intervenir par exemple dans le cas où le calculateur destinataire essaye d'écrire une valeur sur une cellule mémoire corrompue par exemple, ou dans le cas d'une erreur de transmission due par exemple à un champ électromagnétique, ou d'autres cas encore.

Un tel type de problème est généralement détecté par le calculateur destinataire (par exemple au moyen d'une vérification d'un CRC Cyclic Redoundancy Check dans le cas d'une réception erronée). Dans ce cas, une information sera transmise au calculateur maitre pour demander l'exécution du processus de rollback.

On connait par exemple par le document US20190057214 un dispositif de commande de mise à jour comprend une première unité de communication, une seconde unité de communication, et une unité de commande. La première unité de communication est configurée pour recevoir des données de patch pour chaque bloc des logiciels et des premières données d'authentification pour chaque bloc d'authentification d'un logiciel dans un terminal mis à jour en utilisant les données de patch sur une base par bloc. L'unité de commande est configurée pour demander au terminal d'effectuer un rollback pour restauration d'un premier bloc à un (M-1) ième bloc en utilisant les données de patch à réception d'un résultat de mise jour indiquant une défaillance dans une authentification d'un bloc Mième (M> 1).

En outre, l'état de la technique est connu du document CN110471680A. Il concerne une méthode de contrôle pour la mise à jour du logiciel et le retour en arrière des défaillances du contrôleur automobile à énergie hydrogène, et appartient au domaine technique des automobiles. La méthode de contrôle comprend les étapes suivantes : la mise à jour par poussée de mise à niveau du logiciel du contrôleur automobile est obtenue, le logiciel de mise à niveau est téléchargé et vérifié, les informations de partition du contrôleur automobile complet et les informations sur la version actuelle du logiciel sont obtenues et envoyées à un serveur distant, le service de flash de mise à niveau est lancé, et le contrôleur automobile complet répond au service de flash pour mettre à niveau le logiciel ; l'unité de contrôle du véhicule termine la mise à niveau et renvoie un résultat de mise à niveau, et si le terminal Internet des véhicules reçoit des informations sur l'échec de la mise à niveau, un mécanisme de retour en arrière de l'échec de la mise à niveau suivante est mis en place : l'unité de contrôle du véhicule récupère le logiciel de l'unité de contrôle du véhicule à la version du logiciel avant la mise à niveau par le biais d'une technologie de clignotement du véhicule.

Malgré toutes ces précautions et ces systèmes de vérifications, il reste possible que certains cas de mauvais fonctionnement ne puissent pas être détectés à l'issue de la mise à jour OTA.

### Résumé de l'invention

Un objet de la présente invention est de proposer une solution pour remettre rapidement à un état précédent une mise à jour logicielle un calculateur d'un véhicule en particulier lorsqu'un fichier de mis à jour est corrompu.

L'invention concerne en particulier un procédé de mise à jour d'un logiciel d'un calculateur embarqué d'un véhicule, comportant une mémoire d'exécution (ME) dans laquelle sont stockés une pluralité de blocs (A, B, C) d'un logiciel courant, une mémoire de sauvegarde (MS) et une mémoire de contrôle (MC), caractérisé en ce qu'il comporte des étapes successives de :
- Emission (312) d'une requête commandant une écriture en mémoire de contrôle (MC) d'au moins un bloc de logiciel mis à jour (B',C'),
- Emission (313) d'une requête commandant une vérification dudit au moins un bloc de logiciel mis à jour (B',C') stocké en mémoire de contrôle (MC),
- Emission (322) d'une requête commandant la copie depuis la mémoire d'exécution (ME) vers la mémoire de sauvegarde (MS) de la pluralité de blocs (A, B, C) du logiciel courant,
- Emission (332) d'une requête commandant la copie (332) depuis la mémoire de contrôle (MC) vers la mémoire d'exécution (ME) dudit au moins un bloc de logiciel mis à jour (B',C'),
- Emission (333) d'une requête commandant une vérification de l'intégrité des blocs (A,B',C') de logiciel de la mémoire d'exécution (ME),

Et si une erreur est détectée à la vérification de l'intégrité des blocs de logiciel de la mémoire d'exécution alors :
- Emission (400) d'une requête commandant un retour à un état précédent la mise à jour comportant une copie (403) depuis la mémoire de sauvegarde (MS) vers la mémoire d'exécution (ME) de la pluralité de blocs du logiciel courant (A, B, C), ledit procédé étant en outre caractérisé en ce qu'il comporte une étape d'émission d'une requête d'ouverture du session de programmation sur le calculateur embarqué, une session de programmation correspondant à un état du calculateur embarqué dans lequel le calculateur embarqué est non fonctionnel et dans lequel la mémoire d'exécution est accessible en écriture pour modifier des blocs logiciels, le calculateur embarqué étant fonctionnel et la mémoire d'exécution n'étant pas accessible en écriture avant l'émission de cette requête, l'étape d'émission de la requête d'ouverture d'une session de programmation sur le calculateur embarqué étant réalisée à l'issue de l'étape d'émission d'une requête commandant audit calculateur de vérifier l'intégrité de la pluralité de blocs du logiciel courant dans la mémoire de sauvegarde, le procédé comprenant de plus une procédure d'arrêt de l'installation exécutée uniquement en cas d'échec de l'installation avant l'étape d'émission de la requête d'ouverture de session de programmation sur le calculateur embarqué.

L'invention a pour avantage lorsqu'un test d'intégrité des données reçues abouti à un échec, de permettre d'interrompre sans délai la procédure d'installation et de relancer immédiatement le logiciel initial car la mémoire d'exécution (Executing Memory) n'a pas encore été modifiée.

L'invention offre donc un gain de temps mais aussi une sécurité renforcée dans la mesure où elle élimine des risques supplémentaires de corruption des données inévitablement liées aux opérations successives de génération de blocs de logiciel courant dans les solutions de l'état de la technique.

En utilisant une mémoire de vérification supplémentaire, la probabilité de devoir exécuter un Rollback est plus faible qu'avec les autres solutions connues dans l'état de l'art. Ceci diminue considérablement le risque d'échec lors de l'exécution du retour à la configuration n-1 du véhicule.

En outre, en ouvrant la session de programmation du calculateur après la vérification du bloc de logiciel mis à jour stocké en mémoire de contrôle et préférentiellement la copie de la mémoire d'exécution dans la mémoire de sauvegarde, l'invention présente l'avantage de pouvoir réaliser le transfert du calculateur de mise à jour vers le calculateur cible et préférentiellement la copie de la mémoire d'exécution dans la mémoire de sauvegarde alors que le véhicule est dans son état fonctionnel. Ainsi, le véhicule ne doit être à l'arrêt qu'après cette phase. On rappelle que lorsque le véhicule (en particulier un véhicule thermique) roule, l'énergie nécessaire aux opérations de mise à jour peut provenir d'un alternateur. Mais lorsque le véhicule est à l'arrêt, cette énergie provient uniquement de la batterie du véhicule. On comprend que cet aspect peut s'avérer limitant en fonction du nombre de calculateurs à reprogrammer lors de l'opération (une chaine de traction hybride peut mettre en œuvre sept calculateurs différents en cohérence des montées de versions logicielles), du volume de données concerné (taille du logiciel exécutable) à recopier mais aussi du type de réseau interne pour réaliser cette opération.

Chacun de ces critères peut rendre l'opération de mise à jour en OTA applicable ou non en fonction de la réserve d'énergie contenue dans la batterie sachant qu'il convient de toujours disposer à la fin du processus de l'énergie nécessaire au redémarrage du véhicule.

L'invention permet donc de réduire la quantité d'énergie nécessaire contenue dans la batterie pour réaliser une opération de mise à jour, en réalisant le plus possible d'étapes de mise à jour alors que le calculateur est fonctionnel.

Avantageusement, le procédé de mise à jour d'un logiciel d'un calculateur selon l'invention comporte en outre une étape d'émission d'une requête commandant audit calculateur d'effacer la mémoire de contrôle, préalablement à l'émission de la requête commandant l'écriture en mémoire de contrôle d'au moins un bloc de logiciel mis à jour.

Avantageusement, le procédé de mise à jour d'un logiciel d'un calculateur selon l'invention comporte en outre une étape d'émission d'une requête commandant audit calculateur d'effacer la mémoire de sauvegarde, préalablement à l'émission de la requête commandant la copie depuis la mémoire d'exécution vers la mémoire de sauvegarde de la pluralité de blocs du logiciel courant.

Avantageusement, le procédé de mise à jour d'un logiciel d'un calculateur selon l'invention comporte en outre une étape d'émission d'une requête commandant audit calculateur de vérifier l'intégrité de la pluralité de blocs du logiciel courant dans la mémoire de sauvegarde.

Avantageusement, l'étape de retour à un état précédent la mise à jour comporte en outre une étape d'arrêt de la mise à jour comportant une commande de retour à un état précédent la mise à jour à d'autres calculateurs concernés par ladite mise à jour.

Selon une première variante de l'invention, l'étape d'émission de la requête d'ouverture d'une session de programmation sur le calculateur embarqué est réalisée à l'issue de l'étape d'émission d'une requête commandant audit calculateur d'effacer la mémoire de contrôle.

Selon une deuxième variante de l'invention, l'étape d'émission de la requête d'ouverture d'une session de programmation sur le calculateur embarqué est réalisée à l'issue de l'étape d'émission d'une requête commandant audit calculateur de vérifier l'intégrité de la pluralité de blocs du logiciel courant dans la mémoire de sauvegarde.

L'invention concerne aussi un dispositif de mise à jour d'un logiciel d'un calculateur, ledit dispositif comprenant une mémoire associée à au moins un processeur configuré pour mettre en œuvre les étapes du procédé selon l'invention.

L'invention concerne aussi un véhicule caractérisé en ce qu'il comporte un dispositif de mise à jour d'un logiciel d'un calculateur selon l'invention.

### Brève description des figures

D'autres caractéristiques et avantages de l'invention ressortiront de la description des modes de réalisation non limitatifs de l'invention ci-après, en référence aux figures annexées, sur lesquelles :
[Fig. 1] illustre de façon schématique un système, selon un exemple de réalisation particulier de la présente invention ;
[Fig. 2] illustre de façon schématique un calculateur, selon un exemple de réalisation particulier de la présente invention;
[Fig. 3] illustre schématiquement un procédé de mise à jour, selon un exemple de réalisation particulier de la présente invention.
[Fig. 4] illustre schématiquement des sous-étapes d'une étape de remise à un état précédent une mise à jour, selon un exemple de réalisation particulier de la présente invention.
[Fig. 5] illustre un exemple des états successifs de mémoires d'un calculateur au cours d'une mise à jour.

### DESCRIPTION D'EXEMPLES DE REALISATION DE L'INVENTION

L'invention a notamment pour objet un procédé permettant la mise à jour, via une communication filaire ou une communication sans fils, d'un calculateur embarqué muni d'une mémoire externe de capacité double de la mémoire d'exécution. En cas d'échec pendant l'opération de mise à jour du logiciel, la procédure prévoit une opération de Rollback qui permet de revenir à la version n-1 pour que le véhicule puisse retrouver sa fonctionnalité.

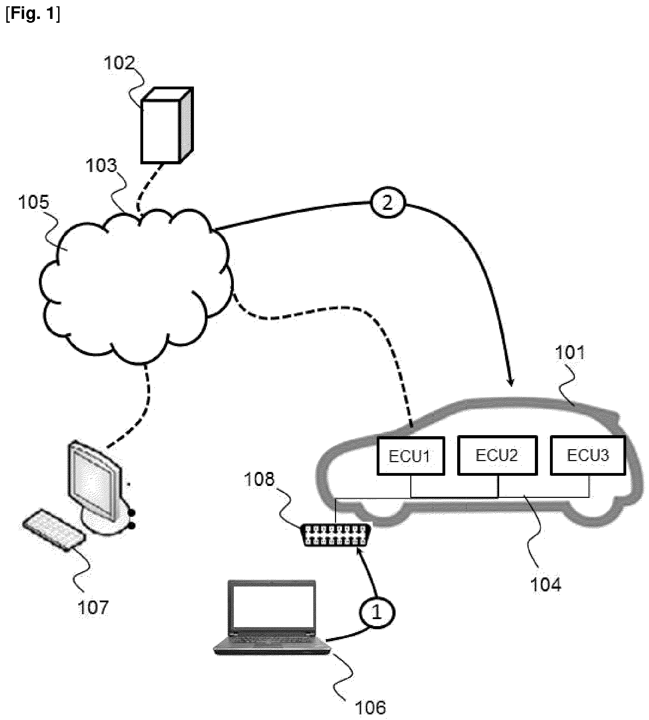

En référence à la figure 1, le système selon l'invention comporte un véhicule 101 connecté à un serveur 102 de mise à jour distant.

Le véhicule 101 comprend une pluralité de calculateurs ECU1, ECU2, ECU3 dont une unité de communication embarquée qui communique avec le serveur 102, par l'intermédiaire d'une connexion sans fil. Typiquement, la connexion ou liaison sans fil est une connexion par ondes radio (3G, 4G,...).

Les calculateurs ECU1, ECU2, ECU3 communiquent entre eux par l'intermédiaire d'un bus de données 104 (par exemple de type CAN).

Le serveur débarqué 102 est par exemple un calculateur générique comportant au moins une mémoire et un processeur.

Le véhicule 101 et le serveur débarqué 102 communique via un réseau étendu 105 tel que un réseau de communication fixe 103 (ou WAN pour "Wide Area Network"), par exemple le réseau Internet auquel le véhicule se connecte par une liaison sans fil (3G, 4G, ...).

Le calculateur ECU1 aussi appelé calculateur de gestion de mise à jour (ou encore FOTA Master - pour Firmware Over-The-Air) qui permet la mise à jour des calculateurs ECU2 à ECU3, dispose à cet effet des mécanismes capables de transférer les fichiers de données reçues en trames attendues par les calculateurs ECU2, ECU3 destinataires pour installer leur logiciel. A noter que le calculateur jouant le rôle de FOTA master dans un véhicule peut ou non être le même calculateur que celui qui dispose des fonctions de communication sans fils.

Un opérateur via un terminal 107 peut réaliser les vérifications et transmet des instructions à distance au véhicule 101. Ces instructions sont transmises au véhicule 101 par voie d'onde qui peut être de la 4G, du WIFI ou toute autre technologie de communication sans fil à venir.

Les calculateurs ECU1, ECU2, ECU3 peuvent être mis à jour dans un garage. La mise à jour d'un logiciel dans un garage répond à une procédure spécifique (cas 1 de la figure 1) au cours de laquelle, l'opérateur devient responsable du véhicule qui lui a été confié. A cet égard, il place le véhicule dans un environnement « safe and secure » avant de lancer cette opération à partir d'un outil 106 branché sur une prise dédiée 108 du véhicule 101 Puis une fois l'opération terminée, il effectue certains contrôles afin de s'assurer de son bon fonctionnement. En cas de problème détecté, soit lors du déroulement de la procédure ou après la mise à jour, le technicien prendra les mesures nécessaires à la correction de l'anomalie (nouvel essai, changement de pièce, ...) avant de restituer le véhicule au client. Le garagiste est donc à ce titre un maillon important de la chaine safety mais est aussi en charge de s'assurer de la qualité de l'opération réalisée.

Lors d'une mise à jour OTA chez un client (cas 2 de la figure 1), rien de tout cela n'est possible et il convient donc d'ajouter dans chaque calculateur un mécanisme permettant de revenir à la version antérieure en cas de problème.

Pour réaliser les opérations décrites dans cette proposition de brevet, le FOTA master communique avec le calculateur cible via le réseau de communication disponible dans le véhicule (par exemple CAN, Ethernet ou autre). Il utilise pour cela un protocole de communication dédié, comme par exemple, le protocole UDS (norme ISO14229) couramment employé pour réaliser le diagnostic ou le téléchargement du logiciel des calculateurs embarqués dans les véhicules automobiles.

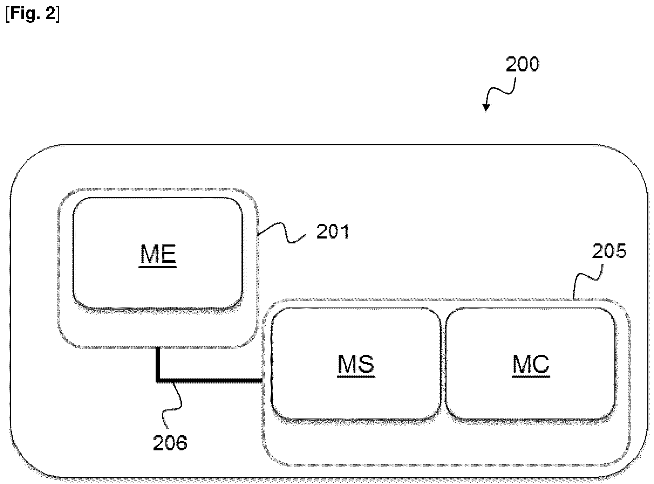

En référence à la figure 2, le calculateur 200 selon l'invention comporte :
- un microcontrôleur 201 comprenant muni d'une mémoire Flash ME, d'une taille donnée N, utilisée pour exécuter le logiciel téléchargé et nommée mémoire d'exécution ME (ou Executing Memory en anglais),
- Une mémoire de sauvegarde MS (ou Backup Memory en anglais), d'une taille au moins égale à la taille donnée N, utilisée comme mémoire de sauvegarde permettant de revenir à la version précédente du logiciel en cas de problème lors de l'installation,
- Une mémoire de contrôle MC (ou Checking Memory en anglais), d'une taille au moins égale à la taille donnée N, utilisée pour vérifier l'intégrité du nouveau logiciel reçu par méthode filaire ou OTA avant même de lancer toute modification du contenu de la mémoire d'exécution.

Selon une première variante de l'invention, la mémoire de sauvegarde MS et la mémoire de contrôle MC appartiennent à une mémoire Flash externe 205, d'une taille au moins égale à deux fois la taille donnée N.

La mémoire Flash externe est liée au microcontrôleur par exemple par un bus 206 SPI (Serial Peripheral Interface), mais il pourrait s'agir d'une autre liaison de données.

Ce bus peut être remplacé par toute autre technologie de bus de communication dont le débit d'échange de données est suffisant pour que l'installation du nouveau logiciel soit réalisée dans un délai raisonnable vu du client. De façon avantageuse, les données échangées entre la mémoire interne et la mémoire externe sont chiffrées, de façon à améliorer la sécurité de la mise à jour.

Selon une deuxième variante de l'invention, la mémoire de sauvegarde MS et la mémoire de contrôle MC peuvent être intégrées dans la mémoire du microcontrôleur 201. Cette variante a pour avantage de ne pas avoir besoin de chiffrer les données lors d'une copie d'une mémoire à l'autre. En outre, cette variante permet de se passer composants additionnels utilisés pour gérer la communication avec une mémoire externe. Par contre cette variante implique d'utiliser un microcontrôleur disposant d'une mémoire interne de taille au moins triple de la taille maximale du logiciel.

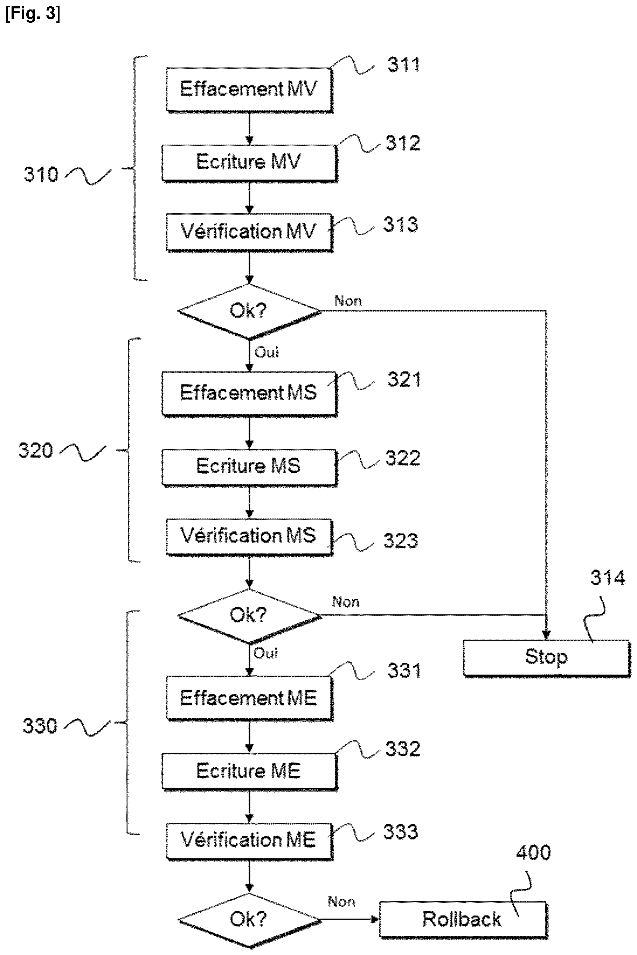

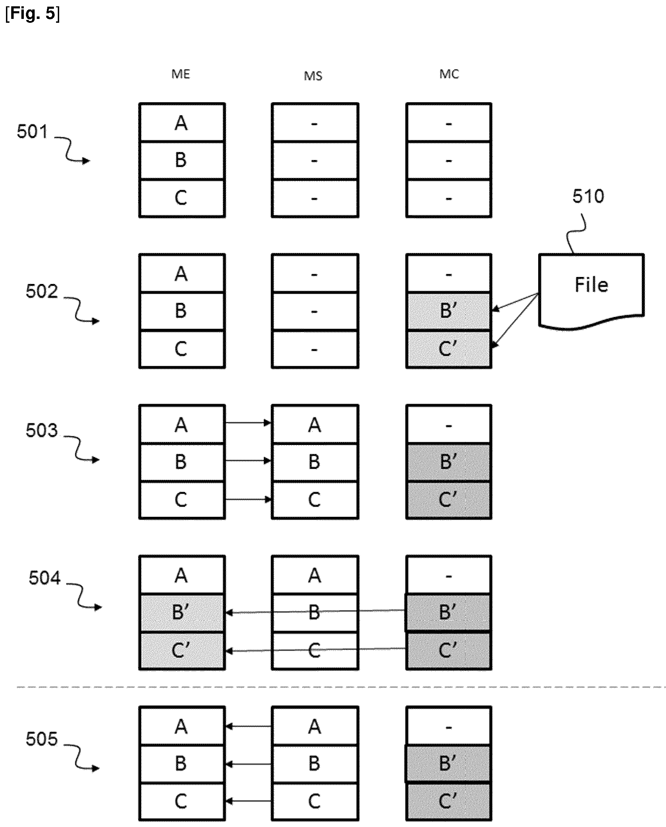

On va maintenant présenter le procédé selon l'invention à l'appui de la figure 3, illustrant des étapes dudit procédé et de la figure 5, montrant un exemple de mise en œuvre dudit procédé.

Dans l'exemple de la figure 5, le calculateur à mettre à jour 200, ou calculateur cible, dispose d'un logiciel dans sa mémoire d'exécution ME. Ce logiciel est composé de 3 blocs de données A, B et C.

Le procédé selon l'invention comporte :
Une première phase 310 au cours de laquelle : les données de mise à jour (blocs B' et C' dans l'exemple) contenues dans le fichier à télécharger sont transmises au calculateur cible 200 (via une communication filaire ou une communication sans fils) et sont placées dans la mémoire de contrôle MC afin de vérifier leur intégrité. Ceci permet de ne pas altérer le logiciel actuellement dans la mémoire d'exécution ME.

Une deuxième phase 320 au cours de laquelle : la totalité du contenu de la mémoire d'exécution ME est dupliquée dans la mémoire de sauvegarde MS afin de conserver une copie du logiciel d'origine.

Une troisième phase 330 au cours de laquelle : les blocs de données contenus dans la mémoire de contrôle MC, blocs B' et C' dans l'exemple, sont recopiés dans la mémoire d'exécution ME afin de remplacer les blocs de l'ancien logiciel (blocs B et C dans l'exemple). Les blocs de données non concernés par la mise à jour ne sont pas modifiés (bloc A dans l'exemple).

Une quatrième phase, dite de Rollback, exécutée en cas d'échec de l'installation au cours de laquelle la totalité du contenu de la mémoire de sauvegarde MS est recopiée dans la mémoire d'exécution ME afin de revenir au logiciel initial.

Au cours de la mise à jour du calculateur cible, le FOTA master place le calculateur 200 dans un état dédié à la programmation (où le fonctionnel est désactivé) en utilisant une requête d'entrée en session reprogrammation. Le calculateur cible 200 accepte d'exécuter cette requête uniquement si les conditions sécuritaires sont remplies (ex : véhicule à l'arrêt, chaîne de traction désactivée, etc.)

En session reprogrammation, le FOTA master communique directement avec le logiciel de boot du calculateur cible 200. En fonction des requêtes envoyées par le FOTA master, le logiciel de boot du calculateur peut exécuter différentes opérations (écriture, copie, contrôle d'intégrité) sur l'une des trois mémoires dont il dispose (mémoire d'exécution ME, mémoire de sauvegarde MS ou mémoire de contrôle MC). Le moment où la requête d'entrée en session reprogrammation est envoyée au calculateur cible est détaillé plus loin dans la description.

La figure 3 décrit une succession d'actions à réaliser par le FOTA master pour installer un nouveau logiciel dans le calculateur cible 200.

Avant l'exécution du procédé de mise à jour selon l'invention, le calculateur cible 200 se trouve dans un premier état 501, dit état initial, dans lequel : la mémoire d'exécution ME comporte trois blocs d'un logiciel courant.

Avantageusement, la première phase 310 comporte les étapes suivantes :
Dans une première étape 311, le FOTA master envoie une requête pour demander au calculateur cible d'effacer la mémoire de contrôle MC.

Dans une deuxième étape 312, le FOTA master écrit les données reçues du serveur distant (par la communication filaire ou sans fils) dans la mémoire de contrôle MC du calculateur cible 200 à l'aide de requêtes dédiées. Cette opération est réitérée pour chaque bloc de donnée à mettre à jour.

Dans le mode de réalisation selon lequel la mémoire de contrôle MC est dans une mémoire externe 205, c'est le logiciel de boot du calculateur cible qui gère de manière transparente pour le FOTA master les échanges réalisés sur le bus de communication 206 (par exemple de type SPI) entre le microcontrôleur 201 et sa mémoire externe 205.

Dans une troisième étape 313, le FOTA master envoie une requête pour demander au calculateur cible 200 de contrôler l'intégrité des données copiées dans la mémoire de contrôle MS. Cette vérification peut être réalisée à l'aide d'un CRC Cyclic Redoundancy Check ou toute autre méthode connue de l'état de l'art (exemple : calcul, à l'aide d'une fonction de hachage, d'un « condensat » du contenu des données téléchargées dans le calculateur cible, et comparaison du résultat avec une valeur de référence transmise au préalable par le FOTA master). Si la mémoire est composée de plusieurs blocs de données, chaque bloc dispose de son propre mécanisme de contrôle d'intégrité (basé sur la même méthode ou des méthodes différentes).

En cas d'échec lors d'une des première 311, deuxième 312 ou troisième 313 étapes, le FOTA master reçoit une réponse négative de la part du calculateur cible 200. Dans ce cas, le FOTA master abandonne le déroulement normal de la procédure d'installation pour exécuter une procédure d'arrêt de l'installation 314.

A l'issue de la première phase 310, le calculateur cible 200 se trouve dans un deuxième état 502 dans lequel : la mémoire d'exécution ME comporte trois blocs d'un logiciel courant A, B, C et la mémoire de contrôle MC comporte les blocs de logiciel mis à jour B', C' issus du fichier de mise à jour 510.

Avantageusement, la deuxième phase 320 comporte les étapes suivantes.

Dans une quatrième étape 321, le FOTA master envoie une requête pour demander au calculateur 200 d'effacer la totalité de la mémoire de sauvegarde MS.

Dans une cinquième étape 322, le FOTA master envoie une requête pour demander au calculateur cible 200 de copier la totalité du contenu de la mémoire d'exécution ME dans la mémoire de sauvegarde MS.

Dans une sixième étape 323, le FOTA master envoie une requête pour demander au calculateur cible 200 de contrôler l'intégrité des données copiées dans la mémoire de sauvegarde MS. Cette vérification est avantageusement réalisée par les mêmes méthodes qu'à la troisième étape 313.

En cas d'échec lors d'une des quatrième 321, cinquième 322 ou sixième 323 étapes, le calculateur cible 200 renvoie une réponse négative au FOTA master. Le FOTA master exécute alors la procédure d'arrêt de l'installation 314.

A l'issue de la deuxième phase 320, le calculateur cible 200 se trouve dans un troisième état 503 dans lequel : la mémoire d'exécution ME comporte les trois blocs du logiciel courant A, B, C, la mémoire de contrôle MC comporte les blocs de logiciel mis à jour B', C' issus du fichier de mise à jour 510, et la mémoire de sauvegarde MS comporte les trois blocs du logiciel courant A, B, C

Selon une caractéristique de l'invention, la troisième phase 330 n'est exécutée que si la première phase 310 et la deuxième phase 320 ont été réalisées avec succès au préalable. A partir de cette phase, le logiciel de boot du calculateur cible 200 invalide le logiciel applicatif présent dans la mémoire d'exécution ME car il est susceptible d'être modifié par la suite des opérations. Pour cela, il peut par exemple stocker une variable (ou flag) en mémoire non-volatile, qui sera testée à chaque initialisation du calculateur 200 pour vérifier si le logiciel applicatif chargé en mémoire d'exécution ME peut être exécuté ou non.

Avantageusement, la troisième phase 330 comporte les étapes suivantes.

Dans une septième étape 331, le FOTA master envoie autant de requêtes que nécessaire pour demander au calculateur cible 200 d'effacer tous les blocs de données à mettre à jour dans la mémoire d'exécution ME. La liste des blocs de données à mettre à jour est fournie au FOTA master via le fichier de téléchargement.

Dans une huitième étape 332, le FOTA master envoie autant de requêtes que nécessaire pour demander au calculateur cible 200 de copier chaque bloc de données à mettre à jour depuis la mémoire de contrôle MC vers la mémoire d'exécution ME.

Dans une neuvième étape 333, le FOTA master envoie autant de requêtes que nécessaire pour demander au calculateur cible de contrôler l'intégrité des données de chaque bloc de données mis à jour dans la mémoire d'exécution ME. Cette vérification est avantageusement réalisée par les mêmes méthodes qu'à la troisième étape 313.

A l'issue de la troisième phase 330, le calculateur cible se trouve dans un quatrième état 504 dans lequel : la mémoire d'exécution ME comporte un bloc du logiciel courant A, et deux blocs du logiciel mis à jour B', C' ; la mémoire de contrôle MC comporte les blocs de logiciel mis à jour B', C' issus du fichier de mise à jour 510 ; et la mémoire de sauvegarde MS comporte les trois blocs du logiciel courant A, B, C

En cas d'échec lors d'une des septième 331, huitième 332 ou neuvième 333 étape, le calculateur cible 200 renvoie une réponse négative au FOTA master. Le FOTA master exécute alors l'opération de retour à un état précédent la mise à jour (Rollback).

Si la troisième phase 333 s'est exécutée correctement, alors le logiciel de boot du calculateur déclare le logiciel applicatif valide (et donc modifie la variable correspondante). Le logiciel nouvellement téléchargé sera donc automatiquement exécuté par le calculateur 200 lors de sa prochaine réinitialisation provoquée soit par requête de la part du FOTA master, soit par une coupure puis remise de l'alimentation.

La procédure d'arrêt de l'installation 314 est exécutée uniquement en cas d'échec de l'installation avant la troisième phase 330.

Deux cas sont à distinguer selon le type d'intervention initialement prévue par l'opérateur : (cas 1) seul le calculateur cible est mis à jour ou (cas 2) plusieurs calculateurs sont concernés par la mise à jour.

Le FOTA master détermine si un plusieurs calculateurs sont concernés par la mise à jour.

Si un seul calculateur est concerné par la mise à jour, le FOTA master envoie un message pour proposer à l'opérateur soit de relancer, soit d'abandonner l'installation. En cas d'abandon, comme le contenu de la mémoire d'exécution ME n'a pas encore été modifié à ce stade des opérations, le calculateur 200 est opérationnel dès le prochain reset, sans opération de Rollback.

Si plusieurs calculateurs sont concernés par la mise à jour, en particulier lorsqu'une cohérence doit être assurée entre les versions de logiciel des différents calculateurs du véhicule :
- Si au moment de l'erreur, seul le calculateur cible 200 a commencé sa mise à jour alors, le FOTA master procède comme pour le premier cas (envoi d'un message à l'opérateur et absence de rollback si abandon),
- Si au moment de l'erreur, d'autres calculateurs dans le véhicule ont déjà été mis à jour, le FOTA master déclenche le processus de Rollback dans tous les calculateurs du véhicule qui le nécessitent jusqu'à retrouver un état précédent la mise à jour dans les autres calculateurs du véhicule.

Comme indiqué précédemment, en cas d'échec lors d'une des septième 331, huitième 332 ou neuvième 333 étape, le FOTA master exécute alors l'opération de retour à un état précédent la mise à jour (Rollback).

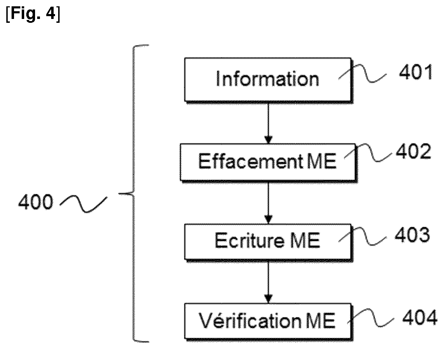

En référence à la figure 4, l'étape de rollback 400 comporte les sous-étapes suivantes.

Avantageusement, le FOTA master transmet 401 un message à l'IHM pour informer l'opérateur qu'une opération de Rollback est en cours sur un ou plusieurs calculateurs du véhicule.

Le FOTA master envoie 402 une requête pour demander au calculateur cible 200 d'effacer la totalité de la mémoire d'exécution ME.

Le FOTA master envoie 403 une requête pour demander au calculateur cible 200 de copier la totalité du contenu de la mémoire de sauvegarde MS dans la mémoire d'exécution ME.

Le FOTA master envoie 404 une requête pour demander au calculateur cible de contrôler l'intégrité des données copiées dans la mémoire d'exécution ME. Cette vérification est avantageusement réalisée par les mêmes méthodes qu'à la troisième étape 313.

A l'issue de l'opération de rollback, le calculateur peut de nouveau fonctionner avec son logiciel initial après sa réinitialisation provoquée soit par une requête du FOTA master, soit par une coupure puis remise de l'alimentation.

A l'issue de l'opération de rollback 400, le calculateur cible se trouve dans un cinquième état 505 dans lequel : la mémoire d'exécution ME comporte les trois blocs du logiciel courant A, B, C, la mémoire de contrôle MC comporte les blocs de logiciel mis à jour B', C' issus du fichier de mise à jour 510, et la mémoire de sauvegarde MS comporte les trois blocs du logiciel courant A, B, C.

Selon une caractéristique de l'invention l'étape d'émission (non représentée sur les figures) d'une requête d'ouverture du session de programmation sur le calculateur embarqué, est envoyée :
- postérieurement à l'étape l'émission (313) d'une requête commandant une vérification dudit au moins un bloc de logiciel mis à jour (B',C') stocké en mémoire de contrôle (MC),
- préalablement à l'étape d'émission (332) d'une requête commandant la copie (332) depuis la mémoire de contrôle (MC) vers la mémoire d'exécution (ME) dudit au moins un bloc de logiciel mis à jour (B',C').

Ainsi avec l'invention, a minima, la première phase du procédé est réalisée alors que le calculateur cible est fonctionnel (l'ordre d'ouverture de la session de reprogrammation n'a pas encore été envoyé).

Par contre, dès lors que le contenu de la mémoire d'exécution ME doit être modifiée, le calculateur doit avoir une session de reprogrammation ouverte.

Selon une première variante de l'invention, l'étape d'émission de la requête d'ouverture d'une session de programmation sur le calculateur embarqué est réalisée à l'issue de l'étape d'émission (311) d'une requête commandant audit calculateur d'effacer la mémoire de contrôle (MC). Cette variante est bien adaptée à une mise en œuvre sur un calculateur cible comportant de faibles ressources de calcul, par exemple un calculateur mono cœur.

Selon une deuxième variante de l'invention, l'étape d'émission de la requête d'ouverture d'une session de programmation sur le calculateur embarqué est réalisée à l'issue de l'étape d'émission (323) d'une requête commandant audit calculateur de vérifier l'intégrité de la pluralité de blocs du logiciel courant (A, B, C) dans la mémoire de sauvegarde (MS) Cette variante est bien adaptée à une mise en œuvre sur un calculateur cible comportant des ressources de calcul plus importantes, par exemple un calculateur multi cœur. Cette variante permet de retarder encore plus (si les ressources du calculateur cible le permettent) le moment où le calculateur cible entre dans un état non fonctionnel.

On rappelle qu'une session de programmation est un état du calculateur dans lequel celui-ci est non fonctionnel et dans lequel la mémoire d'exécution est accessible en écriture pour modifier des blocs logiciels. Au contraire dans un état courant, le calculateur est fonctionnel et la mémoire d'exécution n'est pas accessible en écriture pour modifier des blocs logiciels.

## Revendications

1. Procédé de mise à jour d'un logiciel d'un calculateur embarqué d'un véhicule, comportant une mémoire d'exécution (ME) dans laquelle sont stockés une pluralité de blocs (A, B, C) d'un logiciel courant, une mémoire de sauvegarde (MS) et une mémoire de contrôle (MC), comportant des étapes successives de :
- Emission (312) d'une requête commandant une écriture en mémoire de contrôle (MC) d'au moins un bloc de logiciel mis à jour (B',C'),
Emission (313) d'une requête commandant une vérification dudit au moins un bloc de logiciel mis à jour (B',C') stocké en mémoire de contrôle (MC),
Emission (322) d'une requête commandant la copie depuis la mémoire d'exécution (ME) vers la mémoire de sauvegarde (MS) de la pluralité de blocs (A, B, C) du logiciel courant,
Emission (332) d'une requête commandant la copie (332) depuis la mémoire de contrôle (MC) vers la mémoire d'exécution (ME) dudit au moins un bloc de logiciel mis à jour (B',C'),
Emission (333) d'une requête commandant une vérification de l'intégrité des blocs (A,B',C') de logiciel de la mémoire d'exécution (ME),
Et si une erreur est détectée à la vérification de l'intégrité des blocs (A,B',C') de logiciel de la mémoire d'exécution (ME) alors :
Emission (400) d'une requête commandant un retour à un état précédent la mise à jour comportant une copie (403) depuis la mémoire de sauvegarde (MS) vers la mémoire d'exécution (ME) de la pluralité de blocs du logiciel courant (A, B, C), ledit procédé étant en outre **caractérisé en ce qu'**il comporte une étape d'émission d'une requête d'ouverture de session de programmation sur le calculateur embarqué, une session de programmation correspondant à un état du calculateur embarqué dans lequel le calculateur embarqué est non fonctionnel et dans lequel la mémoire d'exécution est accessible en écriture pour modifier des blocs logiciels, le calculateur embarqué étant fonctionnel et la mémoire d'exécution n'étant pas accessible en écriture avant l'émission de cette requête,
l'étape d'émission de la requête d'ouverture d'une session de programmation sur le calculateur embarqué étant réalisée à l'issue de l'étape d'émission (323) d'une requête commandant audit calculateur de vérifier l'intégrité de la pluralité de blocs du logiciel courant (A, B, C) dans la mémoire de sauvegarde (MS), le procédé comprenant de plus une procédure d'arrêt de l'installation (314) exécutée uniquement en cas d'échec de l'installation avant l'étape d'émission de la requête d'ouverture de session de programmation sur le calculateur embarqué.

2. Procédé de mise à jour d'un logiciel d'un calculateur selon la revendication 1, comportant en outre une étape d'émission (311) d'une requête commandant audit calculateur d'effacer la mémoire de contrôle (MC), préalablement à l'émission (312) de la requête commandant l'écriture en mémoire de contrôle (MC) d'au moins un bloc de logiciel mis à jour (B',C').

3. Procédé de mise à jour d'un logiciel d'un calculateur selon la revendication 2, dans lequel l'étape d'émission de la requête d'ouverture d'une session de programmation sur le calculateur embarqué est réalisée à l'issue de l'étape d'émission (311) d'une requête commandant audit calculateur d'effacer la mémoire de contrôle (MC).

4. Procédé de mise à jour d'un logiciel d'un calculateur selon l'une des revendications précédentes, comportant en outre une étape d'émission (321) d'une requête commandant audit calculateur d'effacer la mémoire de sauvegarde (MS), préalablement à l'émission (322) de la requête commandant la copie depuis la mémoire d'exécution (ME) vers la mémoire de sauvegarde (MS) de la pluralité de blocs du logiciel courant (A, B, C).

5. Procédé de mise à jour d'un logiciel d'un calculateur selon l'une des revendications précédentes, comportant en outre une étape d'émission (323) d'une requête commandant audit calculateur de vérifier l'intégrité de la pluralité de blocs du logiciel courant (A, B, C) dans la mémoire de sauvegarde (MS).

6. Dispositif de mise à jour d'un logiciel d'un calculateur, ledit dispositif comprenant une mémoire associée à au moins un processeur configuré pour mettre en œuvre les étapes du procédé selon l'une quelconque des revendications 1 à 5.

7. Véhicule **caractérisé en ce qu'**il comporte un dispositif de mise à jour d'un logiciel d'un calculateur selon la revendication précédente.

## Patentansprüche

1. Verfahren zur Aktualisierung einer Software eines bordeigenen Rechners eines Fahrzeugs, mit einem Ausführungsspeicher (ME), in dem mehrere Blöcke (A, B, C) einer gängigen Software gespeichert sind, einem Sicherungsspeicher (MS) und einem Steuerspeicher (MC), mit folgenden Schritten:
- Ausgabe (312) einer Abfrage, die einen Schreibvorgang in den Kontrollspeicher (MC) von mindestens einem aktualisierten Softwareblock (B',C') befehligt, Ausgabe (313) einer Abfrage, die eine Überprüfung des mindestens einen aktualisierten Softwareblocks (B',C') im Kontrollspeicher (MC) steuert,
Ausgabe (322) einer Abfrage, die das Kopieren der Mehrzahl von Blöcken (A, B, C) der aktuellen Software vom Ausführungsspeicher (ME) in den Sicherungsspeicher (MS) steuert,
Ausgabe (332) einer Abfrage, die die Kopie (332) des mindestens einen aktualisierten Softwareblocks (B',C') vom Prüfspeicher (MC) zum Ausführungsspeicher (ME) steuert,
Ausgeben (333) einer Anforderung zur Überprüfung der Integrität von Ausführungsspeichersoftwareblöcken (A, B', C'),
Und wenn bei der Überprüfung der Integrität von Software-Blöcken (A, B', C') des Laufzeitspeichers (ME) ein Fehler festgestellt wird, dann:
senden (400) einer Anforderung, die eine Rückkehr zu einem Zustand vor der Aktualisierung steuert, mit einer Kopie (403) aus dem Sicherungsspeicher (MS) in den Ausführungsspeicher (ME) der Vielzahl von Blöcken der aktuellen Software (A, B, C), wobei das Verfahren ferner **dadurch gekennzeichnet ist, dass** es einen Schritt des Sendens einer Anforderung zum Öffnen einer Programmiersitzung an den eingebetteten Rechner umfasst, wobei eine Programmiersitzung einem Zustand des eingebetteten Rechners entspricht, in dem der eingebettete Rechner nicht funktionsfähig ist und in den Ausführungsspeicher zum Ändern von Softwareblöcken geschrieben werden kann, wobei der eingebettete Rechner funktional ist und der Ausführungsspeicher vor dem Ausstellen dieser Anfrage nicht beschreibbar ist,
wobei der Schritt des Ausgebens der Anforderung zum Öffnen einer Programmiersitzung auf dem eingebetteten Rechner am Ende des Schritts des Ausgebens (323) einer Anforderung ausgeführt wird, die den Rechner anweist, die Integrität der Vielzahl von Blöcken der aktuellen Software (A, B, C) im Sicherungsspeicher (MS) zu überprüfen, wobei das Verfahren ferner ein Verfahren zum Beenden der Installation (314) umfasst, das nur ausgeführt wird, wenn die Installation vor dem Schritt des Ausgebens der Anforderung zum Öffnen einer Programmiersitzung auf dem eingebetteten Rechner fehlschlägt.

2. Verfahren zum Aktualisieren der Software eines Rechners nach Anspruch 1, ferner mit einem Schritt des Ausgebens (311) einer Anforderung, die den Rechner anweist, den Steuerspeicher (MC) zu löschen, bevor die Anforderung, die das Schreiben in den Steuerspeicher (MC) von mindestens einem aktualisierten Softwareblock (B', C') anweist, ausgegeben (312) wird.

3. Verfahren zum Aktualisieren der Software eines Rechners nach Anspruch 2, wobei der Schritt des Ausgebens der Anforderung zum Öffnen einer Programmiersitzung an dem eingebetteten Rechner am Ende des Schritts des Ausgebens (311) einer Anforderung ausgeführt wird, die den Rechner zum Löschen des Steuerspeichers (MC) anweist.

4. Verfahren zum Aktualisieren von Computersoftware nach einem der vorhergehenden Ansprüche, ferner mit einem Schritt des Ausgebens (321) einer Anforderung, die den Computer anweist, den Sicherungsspeicher (MS) zu löschen, bevor die Anforderung, die das Kopieren der Vielzahl von Blöcken der aktuellen Software (A, B, C) aus dem Ausführungsspeicher (ME) in den Sicherungsspeicher (MS) anfordert, ausgegeben (322) wird.

5. Verfahren zum Aktualisieren der Software eines Rechners nach einem der vorhergehenden Ansprüche, ferner mit einem Schritt des Ausgebens (323) einer Anforderung, die den Rechner anweist, die Integrität der Vielzahl von Blöcken der aktuellen Software (A, B, C) im Sicherungsspeicher (MS) zu überprüfen.

6. Vorrichtung zum Aktualisieren der Software eines Rechners, wobei die Vorrichtung einen Speicher umfasst, der mit mindestens einem Prozessor verbunden ist, der so konfiguriert ist, dass er die Schritte des Verfahrens nach einem der Ansprüche 1 bis 5 ausführt.

7. Fahrzeug, **dadurch gekennzeichnet, dass** es eine Vorrichtung zur Aktualisierung einer Software eines Rechners nach dem vorhergehenden Anspruch umfasst.

## Claims

1. Method for updating a software of a vehicle on-board computer, comprising an execution memory (ME) in which are stored a plurality of blocks (A, B, C) of a current software, a backup memory (MS) and a control memory (MC), comprising successive steps of:
- sending (312) a request ordering a write to the control memory (MC) of at least one updated software unit (B',C'),
sending (313) a request ordering a checking of said at least one updated software block (B',C') stored in a control memory (MC),
sending (322) a request ordering the copy from the execution memory (ME) to the backup memory (MS) of the plurality of blocks (A, B, C) of the current software,
sending (332) a request ordering the copy (332) from the control memory (MC) to the execution memory (ME) of said at least one updated software unit (B',C'), sending (333) a request ordering a checking of the integrity of the blocks (A, B', C') of software of the execution memory (ME),
and if an error is detected at the checking of the integrity of the execution memory (ME) software blocks (A, B', C') then:
transmission (400) of a request ordering a return to a status previous the update comprising a copy (403) from the backup memory (MS) to the execution memory (ME) of the plurality of blocks of the current software (A, B, C), said method being further **characterised in that** it comprises a step of transmission of a request to open a programming session on the on-board computer, a programming session corresponding to a status of the on-board computer in which the on-board computer is non-functional and in which the execution memory is writable to modify blocks softwares, the on-board computer being functional and the execution memory not being accessible for writing before the transmission of this request,
the step of sending the request to open a programming session on the on-board computer being realised at the end of the step of sending (323) a request ordering said computer to check the integrity of the plurality of blocks of the current software (A, B, C) in the backup memory (MS), the method further comprising a procedure for shutdown of the installation (314) executed only in the event of failure of the installation before the step of sending the request to open a programming session on the on-board computer.

2. Method for updating a software of a computer according to claim 1, further comprising a step of sending (311) a request ordering said computer to erase the control memory (MC), prior to sending (312) the request ordering the writing in the control memory (MC) of at least one updated software unit (B',C').

3. Method for updating a computer software according to claim 2, wherein the step of sending the request to open a programming session on the onboard computer is realised at the end of the step (311) of sending a request ordering said computer to erase the control memory (MC).

4. Method for updating a software of a computer according to one of the previous claims, further comprising a step of sending (321) a request ordering said computer to erase the backup memory (MS), prior to sending (322) the request ordering the copy from the execution memory (ME) to the backup memory (MS) of the plurality of blocks of the current software (A, B, C).

5. Method for updating a software of a computer according to one of the previous claims, further comprising a step of sending (323) a request ordering said computer to check the integrity of the plurality of blocks of the current software (A, B, C) in the backup memory (MS).

6. Device for updating a computer software, said device comprising a memory associated with at least one processor configured to implement the steps of the method according to any one of claims 1 to 5.

7. Vehicle **characterised in that** it comprises a device for updating a software of a computer according to the previous claim.
